# EUROPEAN PATENT APPLICATION

(11) **EP 4 647 200 A1**
(43) Date of publication of application: **12.11.2025**
(21) Application number: 25172744.2
(22) Date of filing: 25.04.2025
(51) Int. Cl.: B23K 9/173, B08B 15/04, B23K 9/29, B23K 9/32

(54) **WELDING FUME TORCH AND WELDING SYSTEM HAVING SUCH WELDING FUME TORCH**

(30) Priority: 30.04.2024 US 202463640590 P; 03.04.2025 US 202519169579
(71) Applicant: Illinois Tool Works Inc., Glenview IL 60025 (US)
(72) Inventor: JANSMA, Jeremy L., Glenview 60025 (US)
(74) Representative: HGF

(57) **Abstract**

The present application relates to a welding fume torch (200), which include: a handle (202) having a grip section (212), a neck (206) extending from a forward end of the handle (202), a fume collection nozzle (208) in fluid communication with an interior of the handle (202), and a fume hose in fluid communication with the fume collection nozzle (208) via the interior of the handle (202), the handle (202) including a fume channel having a larger flow area than the grip section (212), having at least one dimension that is larger than a same dimension of at least one section of the handle (202) forward of the fume channel (408a), and configured to reduce flow resistance for fume between the fume collection nozzle (208) and the fume hose, at least part of the fume channel being forward of the grip section (212).

## Description

### RELATED APPLICATIONS

The present application claims the benefit of U.S. Provisional Patent Application Serial No. 63/640,590, filed April 30, 2024, entitled "WELDING FUME TORCHES AND WELDING SYSTEMS HAVING WELDING FUME TORCHES." The entirety of U.S. Provisional Patent Application Serial No. 63/640,590 is expressly incorporated herein by reference.

### FIELD OF THE DISCLOSURE

The present disclosure relates generally to welding and, more particularly, to welding fume torches and welding systems having welding fume torches.

### BACKGROUND

A wide range of industrial, commercial, hobby and other applications result in airborne components that can be removed with proper extraction and filtering. Metal working operations, for example, including cutting, welding, soldering, assembly, and other processes may generate smoke, particulate, and fumes. In some shops it may be convenient simply to open ambient air passages or to use negative pressure or discharge air from fans to maintain relatively clean air spaces. In other applications, cart-type fume extractors are used. In industrial settings, more complex fixed systems may be employed for extracting fumes from specific works cells, metal working locations, and so forth. In other settings, such as machine shops, woodworking shops, worksites where cutting, sanding and other operations are performed, dust, fumes, particulate and other types of airborne components may be generated that it may be desirable to collect and extract from work areas and controlled spaces.

### SUMMARY

Welding fume torches and welding systems having welding fume torches systems are disclosed, substantially as illustrated by and described in connection with at least one of the figures, as set forth more completely in the claims.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 illustrates an example fume extraction system including a welding fume extraction torch, in accordance with aspects of this disclosure.
FIGS. 2A and 2B are perspective views of an example fume extraction welding torch that may be used to implement the welding fume extraction torch of FIG. 1.
FIG. 3 is a side elevation view of the example fume extraction welding torch of FIGS. 2A and 2B.
FIG. 4 is a top plan cross-section view of the example fume extraction welding torch of FIGS. 2A and 2B.
FIG. 5 is a rear elevation cutaway view of the fume extraction welding torch of FIGS. 2A and 2B.
FIG. 6 is a side elevation view of the example fume extraction welding torch of FIGS. 2A and 2B.

The figures are not necessarily to scale. Where appropriate, similar or identical reference numbers are used to refer to similar or identical components.

### DETAILED DESCRIPTION

Fume extraction gas metal arc welding (GMAW) torches (or guns) perform extraction of fumes and/or other airborne components using the torch in addition to providing the welding arc, electrode wire, and shielding gas. Conventional fume extraction torches include a volume within the handle of the torch that allows for flow of fumes. The flow rate for fume to flow through the torch is related to the sizes of the internal components (power cable, trigger, etc.), the inner dimensions of the handle, and the negative pressure applied by the vacuum source.

However, simply increasing the size of the torch handle has significant drawbacks. Smaller, more ergonomic handles are desired to reduce user fatigue and to make the gun easier to hold and manipulate over long periods of time. Because the handles for fume extraction GMAW torches are typically larger and less ergonomic than a non-fume-extracting GMAW gun handle (e.g., to provide internal volume for fume flow), the downsides to further increasing the size of the handle also increase.

Disclosed example welding fume torches provide improved fume flow by including fume channels that increase the flow area without interfering with the grip section of the welding fume torch. This new concept of fume channels can be used to increase clearance for vacuum flow without requiring the entire handle to grow in size as is typical for fume extraction MIG guns. In some examples, a welding fume torch includes one or more fume channels in the handle portion of the welding fume torch that increases the flow area for fume and/or reduce flow resistance. Example fume channels protrude or increase the circumference of the handle, but are located at portions of the handle that do not interfere with operator grip (e.g., forward of the grip section).

Disclosed example welding fume torches include: a handle having a grip section; a contact tip assembly configured to deliver welding current to an electrode wire; a neck coupled between the handle and the contact tip assembly, in which the neck extends from a forward end of the handle; a conductive cable coupled to the contact tip assembly and configured to conduct the welding current and guide the electrode wire to the contact tip assembly via the neck; a fume collection nozzle surrounding at least one of the neck or the contact tip assembly, in which the fume collection nozzle is in fluid communication with an interior of the handle; and a fume hose in fluid communication with the fume collection nozzle via the interior of the handle. The handle includes a fume channel having a larger flow area than the grip section, in which the fume channel at least one dimension that is larger than a same dimension of at least one section of the handle forward of the fume channel. The fume channel is configured to reduce flow resistance for fume between the fume collection nozzle and the fume hose, and at least part of the fume channel is forward of the grip section.

In some example welding fume torches, the handle further includes a trigger forward of the grip section. In some example welding fume torches, the handle includes a first protrusion at a location of the fume channel. In some example welding fume torches, the handle includes at least two sections coupled with fasteners, and the first protrusion extends from the handle in a direction parallel to the fasteners. In some example welding fume torches, an interior portion of the protrusion protrudes between 50 thousandths of an inch and 150 thousandths of an inch from an interior surface of the handle that is adjacent the protrusion. In some example welding fume torches, the handle includes a second protrusion at a location of the fume channel and on an opposite side of the handle from the first protrusion.

In some example welding fume torches, the at least one dimension is transverse to a plane of a centerline of the neck. Some example welding fume torches further include a ball swivel connector configured to connect the handle to the fume hose. In some example welding fume torches, the flow area at the fume channel is larger than a flow area of at least one other location along a length of the handle.

Disclosed example welding fume collection systems include: a suction source; and a welding fume torch coupled to the suction source via a fume hose. The welding fume torch includes: a handle having a grip section; a contact tip assembly configured to deliver welding current to an electrode wire; a neck coupled between the handle and the contact tip assembly, in which the neck extends from a forward end of the handle; a conductive cable coupled to the contact tip assembly and configured to conduct the welding current and guide the electrode wire to the contact tip assembly via the neck; and a fume collection nozzle surrounding at least one of the neck or the contact tip assembly, in which the fume collection nozzle is in fluid communication with an interior of the handle. The fume hose is in fluid communication with the fume collection nozzle via the interior of the handle, and the handle includes a fume channel having a larger flow area than the grip section. The fume channel has at least one dimension that is larger than a same dimension of at least one section of the handle forward of the fume channel, and is configured to reduce flow resistance for fume between the fume collection nozzle and the fume hose. At least part of the fume channel is forward of the grip section.

In some example welding fume collection systems, the handle further includes a trigger forward of the grip section. In some example welding fume collection systems, the handle includes a first protrusion at a location of the fume channel. In some example welding fume collection systems, the handle includes at least two sections coupled with fasteners, and the first protrusion extends from the handle in a direction parallel to the fasteners. In some example welding fume collection systems, an interior portion of the protrusion protrudes between 50 thousandths of an inch and 150 thousandths of an inch from an interior surface of the handle that is adjacent the protrusion. In some example welding fume collection systems, the handle includes a second protrusion at a location of the fume channel and on an opposite side of the handle from the first protrusion.

In some example welding fume collection systems, the at least one dimension is transverse to a plane of a centerline of the neck. Some example welding fume collection systems further include a ball swivel connector configured to connect the handle to the fume hose. In some example welding fume collection systems, the flow area at the fume channel is larger than a flow area of at least one other location along a length of the handle.

As used herein, "airborne components" discussed in the present disclosure may include any substance that is borne by, suspended in or otherwise carried by the air, or more generally the fluid present in the area considered. Depending upon the application, the airborne components may be in an aerosol form, such as solid, liquid or gaseous phase particles that are suspended in air. Such airborne components may form smoke, fumes (including chemical fumes), or clouds present or given off by an operation ongoing in the area, whether or not visible to the human operators. In other applications, the airborne components may be at least temporarily airborne but not suspended in the air, such as in the case of larger particulate, such as droplets, mist (e.g., from oils, coolants, and so forth), dust (e.g., from drywall, grain, minerals, cements, or other dust sources), chips, debris, and so forth. The present techniques are directed to collecting and extracting any such airborne components in the manners described. Similarly, reference is made in this disclosure to "air" or "airborne", although the fluid in which the airborne components are found and that is circulated by the system may be, more generally, a gaseous substance that need not contain the same constituents, or in the same ratios as found in atmospheric air. Such gasses are intended nevertheless be included in the term "air" or "airborne". Moreover, it is presently contemplated that the same principles of fluid dynamics and borne component removal may be applied to other "fluids" than air or gasses (including liquids), and to that extent the teachings of the present disclosure are intended to extend to those applications.

As used herein, a "circuit" includes any analog and/or digital components, power and/or control elements, such as a microprocessor, digital signal processor (DSP), software, and the like, discrete and/or integrated components, or portions and/or combinations thereof.

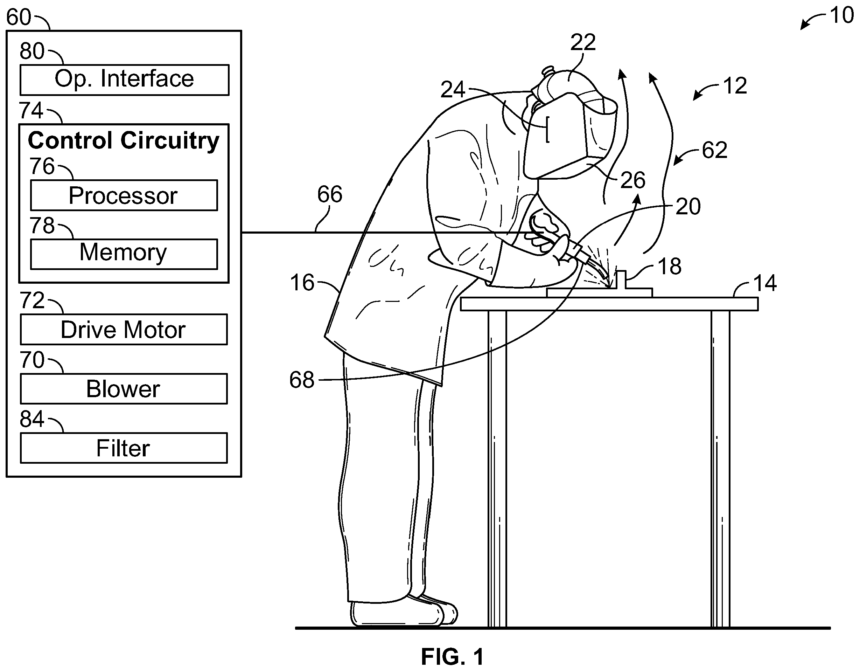

Turning now to the figures, FIG. 1 illustrates one embodiment of a fume extraction system 10 being used during a welding operation. It should be understood however, that welding is merely an example and that a wide range of industrial, commercial, hobby and other applications may result in fumes, smoke, or other airborne components that can be removed by the extraction system 10. Metal working operations, for example, cutting, welding, soldering, assembly, and other processes may generate smoke, particulate, and fumes. In machine shops, woodworking shops, worksites where cutting, sanding and other operations are performed, dust, fumes, particulate and other types of airborne components may be generated that it may be desirable to collect and extract from work areas and controlled spaces. In some applications, the extraction system 10 is placed in the work area 12 (e.g., work cell), in the vicinity of (e.g., above) the work surface 14. As a user 16 (e.g., a welder) performs a work operation (e.g., a welding operation) on a workpiece 18 using a welding torch 20, the extraction system 10 may draw fumes and smoke from the work area 12. The user may utilize a helmet 22 (e.g., welding helmet) or other protective headwear.

The example helmet 22 includes a window 26, which may be a transparent, translucent, or opaque material. For example, the window 26 may be a completely transparent or tinted materials that allows the user 16 to directly view the work surface 14 and the welding torch 20 during the performance of the work operation. In some examples, the window 26 may include one or more displays (e.g., LCD, plasma, virtual reality, augmented reality, LEDs, and the like), which may provide the user 16 with information while performing the work operation. In other examples, the window 26 is completely opaque, but includes a display that shows video from a camera or a virtual reality setting that allows the user 16 to see what he or she is doing. In some examples, the window 26 is be transparent or translucent and have a display overlaid on the window 26 to provide alerts, metrics, or an augmented reality setting for the user 16.

The extraction system 10 shown in FIG. 1 includes a negative pressure generator 60 to generate negative pressure (e.g., to create a negative pressure source). The negative pressure generated by the negative pressure generator 60 may be directed toward the work area 12. The negative pressure generator60 is coupled to one or more conduits 66 that channel air from a fume extractor68. To locate the negative pressure in the vicinity of the location of fume generation (e.g., at the arc), the fume extractor 68 is coupled to the welding torch 20. The welding torch 20 is naturally positioned at or near the work area 12 and, when the base unit is activated, serves to create negative pressure zone of air closely situated to the work area 12 to extract the workspace air 62, which is directed to the negative pressure generator 60 for processing.

The negative pressure generator 60 may be implemented as a stand-alone base unit, on a movable cart-type unit, a fixed installation unit, a wearable unit worn by the operator, and/or any other physical configuration. The negative pressure generator 60 may serve a simple work area 12 or multiple weld cells or other work areas, such as via common conduits that draw air and airborne components from multiple work areas 12. Operator controls for the negative pressure generator may be located on the negative pressure generator 60 or remotely, such as on the fume extractor(s) 68.

The example negative pressure generator 60 includes a blower 70, or other negative pressure gas stream source, such as a squirrel-cage blower, driven by a drive motor 72. The drive motor 72 is controlled by control circuitry 74, which may provide drive signals to the motor for fixed-speed and/or variable-speed operation. The base unit 64 may be designed to draw power from any source, such as the power grid, battery sources, engine-generator sets, and so forth. The control circuitry 74 typically includes a processor 76 and memory 78 for carrying out drive operations as desired by the operator or in response to system inputs as described below. Accordingly, the control circuitry 74 may communicate with an operator interface 80 for receiving operator settings, speed settings, on-off commands, and so forth. Similarly, the control circuitry 74 may communicate with a remote interface designed to receive signals from remote inputs, remote systems, and so forth. The remote interface may also provide data to such remote systems such as for monitoring and/or controlling operation of the negative pressure generator 60, and in some cases the entire extraction system 10.

The conduit 66 extending between the negative pressure generator 60 and the fume extractor 68 is a negative pressure air conduit. In general, the negative pressure air conduit 66 is under a negative or slight suction pressure to draw air containing the airborne components from the work area 12. The air flowing from the conduit 66 may be directed through a suction filter 84 before being introduced into the blower 70. The air may then be reintroduced to the workspace, recirculated in the local environment, or expelled from the local environment.

As noted above, the present techniques may allow for adjustment of the negative pressure air flow to adapt operation of the system 10 to specific operations. For example, a negative pressure air adjustment may be provided before the suction filter 84. This adjustment may comprise, for example, a bypass valve, a louver, or other mechanical device which may be adjusted to limit the flow of air from the suction filter and, consequently, the intake of air into the blower 70 from the ambient surroundings. In some cases, the negative pressure air adjustment may allow some air to exit to the environment, as illustrated in FIG. 1. Negative pressure air adjustment may allow for relative mass or volumetric flow rates of the negative pressure airstream to enhance creation of the air region and extraction of workspace air. The negative pressure air adjustment may involve manual adjustment and/or automatic control via inputs (e.g., via the control circuitry 74, based on data from sensors on the welding torch 20, etc.). Controls may be provided on the operator interface 80, such as through adjustment dials, membrane switches, operator touch controls, and/or other inputs. Manual and/or electronic adjustment of one or both airstreams may be provided at the welding torch 20. Electronic adjustments or inputs are communicated from the welding torch 20 to the control circuitry 74. The control circuitry 74 may be coupled to negative pressure air adjustment devices (e.g., via small adjustment motors and actuator assemblies). Additionally or alternatively, negative pressure air adjustments to flow rates may be made by altering the speed of one or more motors and/or blowers, fans, and/or compressors.

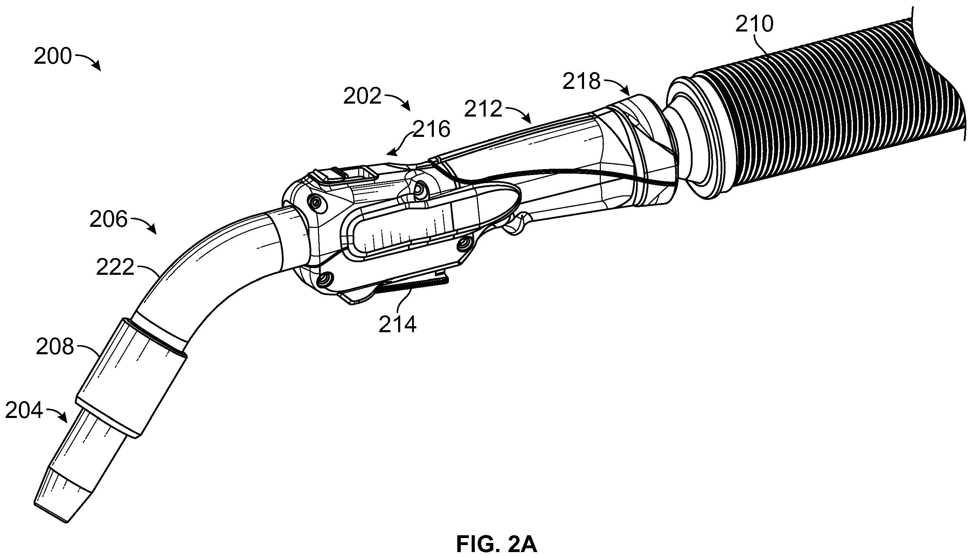

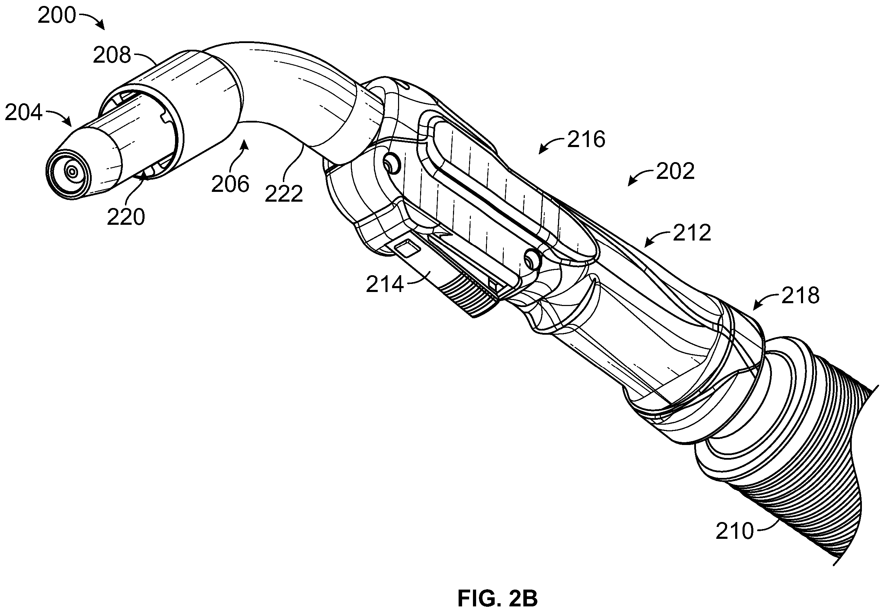

FIGS. 2A and 2B are perspective views of an example fume extraction welding torch 200 that may be used to implement the welding torch 20 of FIG. 1. The example welding torch 200 includes a handle 202, a contact tip assembly 204, a neck 206, a fume collection nozzle 208, and a fume hose 210.

The example handle 202 provides a housing which can be gripped and manipulated by an operator, and includes a grip section 212, a trigger 214, and an interior volume. The grip section 212 is configured to be gripped by an operator, and may include contours and dimensions which are easily gripped by a range of operator hand sizes (e.g., dimensioned and/or contoured to reduce fatigue while holding). The trigger 214 is forward of the grip section 212, and is in communication with a welding-type power supply to control delivery of welding power, electrode wire, and shielding gas to perform welding. The handle 202 further includes a forward section 216 from which the neck 206 extends and a rear section 218 to which the fume hose 210 is connected. In the illustrated example, the fume hose 210 is connected to the handle 202 via a ball swivel.

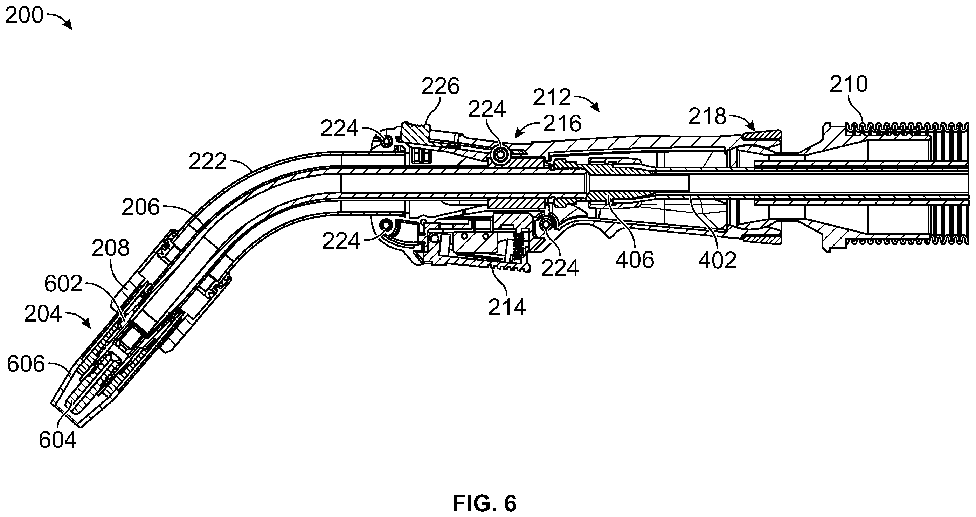

The neck 206 is attached to the handle 202, and conveys welding current, electrode wire, and shielding gas to the contact tip assembly 204. The contact tip assembly 204 delivers the welding current to the electrode wire for generating a welding arc. As illustrated in FIG. 6, the contact tip assembly 204 may include components such as a gas diffuser 602, a contact tip 604, and a nozzle 606.

The fume collection nozzle 208 is positioned proximate to the contact tip assembly 204, and includes one or more fume collection aperture(s) 220 (FIG. 2B). The fume collection nozzle 208 may surround a portion of one or both of the fume collection aperture(s) 220. contact tip assembly 204 and/or the neck 206, based on the desired proximity of the fume collection aperture The fume collection nozzle 208 is in fluid communication with the interior volume of the handle 202 via a fume sleeve 222.

The fume hose 210 is in fluid communication with the fume collection nozzle 208 via the fume sleeve 222 and the interior of the handle 202. The fume hose 210 may implement the conduit 66 of FIG. 1. The fume hose 210 conveys negative pressure from the negative pressure generator 60 to the fume collection nozzle 208, and conveys collected fume and/or other airborne components toward the negative pressure generator 60 (e.g., to the filter 84).

The example handle 202 has a two-piece construction, and is fastened together using fasteners 224 (e.g., bolts, screws, or any other type of fastener). However, the handle 202 may be of single-piece construction, a different type of two-piece construction, and/or using any other construction technique.

The handle 202 further includes a vacuum bypass control 226. The vacuum bypass control 226 allows an operator to manually adjust the vacuum strength at the fume collection nozzle 208 by opening or closing a bypass path for the negative pressure within the handle 202. By opening the vacuum bypass control 226 further, the operator reduces the negative pressure and resulting fume capture at the fume collection nozzle 208.

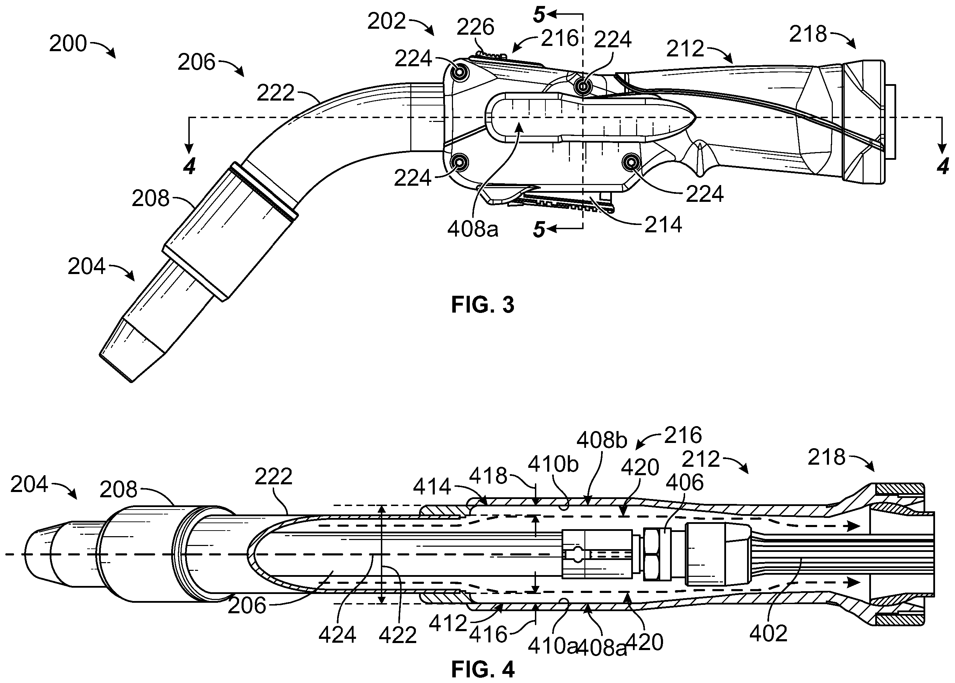

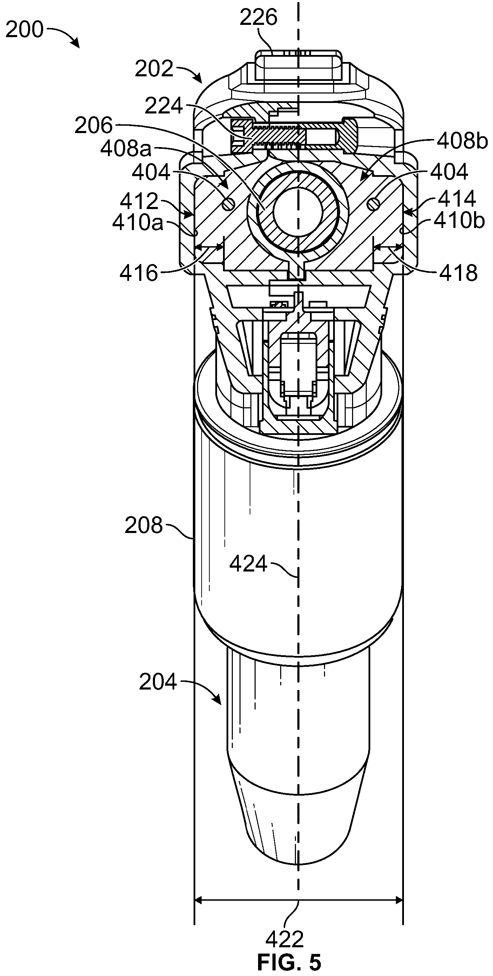

FIG. 3 is a side elevation view of the example fume extraction welding torch 200 of FIGS. 2A and 2B. FIG. 4 is a top plan cross-section view of the example fume extraction welding torch 200 of FIGS. 2A and 2B. FIG. 5 is a rear elevation cutaway view of the fume extraction welding torch 200 of FIGS. 2A and 2B, and FIG. 6 is a side elevation view of the example fume extraction welding torch 200.

As illustrated in FIGS. 4 and 6, the torch 200 further includes a conductive cable 402 which is coupled to the neck 206 within the interior volume 404 of the handle 202. The neck 206 couples the conductive cable 402 to the contact tip assembly 204, conducts the welding current, and guides the electrode wire to the contact tip assembly 204 via the neck 206. The conductive cable 402 and the neck 206 are coupled via a cable connector 406. The example cable connector 406 electrically and mechanically connects the conductive cable 402 to the neck 206, and includes an aperture for electrode wire (and a wire liner) to extend through the conductive cable 402, the cable connector 406, and the neck 206.

In contrast with conventional fume extraction torches, the example torch 200 provides improved flow of fume and/or airborne components from the fume collection nozzle 208 to the fume hose 210 through the handle 202, thereby improving the efficiency of fume collection by the torch 200. To improve the flow of fume and/or airborne components, the example torch 200 includes fume channels 408a, 408b in the handle 202.

The example fume channels 408a, 408b are positioned in the forward section 216 of the handle 202, and are implemented using protrusions from the handle 202. Because the protrusions providing the fume channels 408a, 408b are located forward of the grip section 212, the ergonomic properties of the grip section 212 are not impacted by the presence of the fume channels 408a, 408b. The fume channels 408a, 408b increase a flow area within the interior volume 404 to be, for example, larger than a flow area in the grip section 212 and/or larger than a flow area of at least one other location along a length of the handle 202.

To provide additional flow area relative to other portions of the handle 202, the example fume channels 408a, 408b have at least one dimension that is larger than a same dimension of at least one section of the handle 202 forward of the fume channels 408a, 408b. The at least one dimension 422 is transverse to a plane 424 of the centerline of the neck 206. As illustrated FIGS. 3, 4, and 5, the example fume channels 408a, 408b have inner surfaces 410a, 410b which protrude from adjacent inner surfaces 412, 414 by distance(s) 416, 418 (e.g., along the dimension 422). The distances 416, 418 may be the same or different. In some examples, the distance(s) 416, 418 that the protrusion extends outward from the adjacent inner surfaces (e.g., forward or rear, above or below the fume channels 408a, 408b) is between 50/1000ths of an inch and 150/1000ths of an inch. In some such examples, the distance(s) 416, 418 the protrusion extends outward from the adjacent inner surfaces 412, 414 is between 100/1000ths of an inch and 120/1000ths of an inch. The depth of the protrusion provides both adequate flow area within the handle 202 without interfering with the grip and without substantially interfering with the view of the operator during welding operations. An example fume flow 420 through the handle 202 is illustrated in FIG. 4.

While the example handle 202 is illustrated as having two fume channels 408a, 408b, in other examples more or fewer fume channels may be used. The fume channels 408a, 408b from the handle 202 in a direction parallel to the fasteners 224. The example fume channels 408a, 408b extend in direction of a length of the welding torch 200, which avoids interference with fasteners used in the two-piece construction of the handle 202. The positioning and configuration of the example fume channels 408a, 408b also allows placement of the trigger 214 and vacuum bypass control 226 in conventional positions. However, in other examples (e.g., using different constructions of the handle 202), the fume channels 408a, 408b may be positioned at different locations about the circumference of the handle 202.

While the flow area at the fume channels 408a, 408b may be greater than the flow area at other locations within the handle 202 (e.g., due to the presence, size, and/or arrangement of internal components such as the conductive cable 410 and/or the cable connector 406), the fume channels 408a, 408b reduce the overall flow resistance of the handle 202 between the fume collection nozzle 208 and the fume hose 210.

Using similar settings of a suction source, the disclosed example torch 200 provided an increase of up to approximately 8 CFM of flow relative to the highest-flow torch that was tested (e.g., an increase from 42-44CFM in the conventional torch to about 50 CFM in the disclosed example torch).

As utilized herein the terms "circuits" and "circuitry" refer to physical electronic components (i.e. hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, "and/or" means any one or more of the items in the list joined by "and/or". As an example, "x and/or y" means any element of the three-element set {(x), (y), (x, y)}. In other words, "x and/ory" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g.," and "for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by a user-configurable setting, factory trim, etc.).

While the present method and/or system has been described with reference to certain implementations, it will be understood by those skilled in the art that various changes may be made and equivalents may be substituted without departing from the scope of the present method and/or system. For example, block and/or components of disclosed examples may be combined, divided, re-arranged, and/or otherwise modified. In addition, many modifications may be made to adapt a particular situation or material to the teachings of the present disclosure without departing from its scope. Therefore, the present method and/or system are not limited to the particular implementations disclosed. Instead, the present method and/or system will include all implementations falling within the scope of the appended claims, both literally and under the doctrine of equivalents.

Certain embodiments of the invention are described in the following clauses:
Clause 1. A welding fume torch, comprising:
   a handle comprising a grip section;
   a contact tip assembly configured to deliver welding current to an electrode wire;
   a neck coupled between the handle and the contact tip assembly, the neck extending from a forward end of the handle;
   a conductive cable coupled to the contact tip assembly and configured to conduct the welding current and guide the electrode wire to the contact tip assembly via the neck;
   a fume collection nozzle surrounding at least one of the neck or the contact tip assembly, the fume collection nozzle in fluid communication with an interior of the handle; and
   a fume hose in fluid communication with the fume collection nozzle via the interior of the handle,
   wherein the handle comprises a fume channel having a larger flow area than the grip section, having at least one dimension that is larger than a same dimension of at least one section of the handle forward of the fume channel, and configured to reduce flow resistance for fume between the fume collection nozzle and the fume hose, at least part of the fume channel being forward of the grip section.
Clause 2. The welding fume torch as defined in clause 1, wherein the handle further comprises a trigger forward of the grip section.
Clause 3. The welding fume torch as defined in clause 1, wherein the handle comprises a first protrusion at a location of the fume channel.
Clause 4. The welding fume torch as defined in clause 3, wherein the handle comprises at least two sections coupled with fasteners, and the first protrusion extend from the handle in a direction parallel to the fasteners.
Clause 5. The welding fume torch as defined in clause 3, wherein an interior portion of the protrusion protrudes between 50 thousandths of an inch and 150 thousandths of an inch from an interior surface of the handle that is adjacent the protrusion.
Clause 6. The welding fume torch as defined in clause 3, wherein the handle comprises a second protrusion at a location of the fume channel and on an opposite side of the handle from the first protrusion.
Clause 7. The welding fume torch as defined in clause 1, wherein the at least one dimension is transverse to a plane of a centerline of the neck.
Clause 8. The welding fume torch as defined in clause 1, further comprising a ball swivel connector configured to connect the handle to the fume hose.
Clause 9. The welding fume torch as defined in clause 1, wherein the flow area at the fume channel is larger than a flow area of at least one other location along a length of the handle.
Clause 10. A welding fume collection system, comprising:
   a suction source; and
   a welding fume torch coupled to the suction source via a fume hose, the welding fume torch comprising:
      a handle comprising a grip section;
      a contact tip assembly configured to deliver welding current to an electrode wire;
      a neck coupled between the handle and the contact tip assembly, the neck extending from a forward end of the handle;
      a conductive cable coupled to the contact tip assembly and configured to conduct the welding current and guide the electrode wire to the contact tip assembly via the neck; and
      a fume collection nozzle surrounding at least one of the neck or the contact tip assembly, the fume collection nozzle in fluid communication with an interior of the handle;
      wherein the fume hose is in fluid communication with the fume collection nozzle via the interior of the handle, and
      wherein the handle comprises a fume channel having a larger flow area than the grip section, having at least one dimension that is larger than a same dimension of at least one section of the handle forward of the fume channel, and configured to reduce flow resistance for fume between the fume collection nozzle and the fume hose, at least part of the fume channel being forward of the grip section.
Clause 11. The welding fume collection system as defined in clause 10, wherein the handle further comprises a trigger forward of the grip section.
Clause 12. The welding fume collection system as defined in clause 10, wherein the handle comprises a first protrusion at a location of the fume channel.
Clause 13. The welding fume collection system as defined in clause 12, wherein the handle comprises at least two sections coupled with fasteners, and the first protrusion extend from the handle in a direction parallel to the fasteners.
Clause 14. The welding fume collection system as defined in clause 12, wherein an interior portion of the protrusion protrudes between 50 thousandths of an inch and 150 thousandths of an inch from an interior surface of the handle that is adjacent the protrusion.
Clause 15. The welding fume collection system as defined in clause 12, wherein the handle comprises a second protrusion at a location of the fume channel and on an opposite side of the handle from the first protrusion.
Clause 16. The welding fume collection system as defined in clause 10, wherein the at least one dimension is transverse to a plane of a centerline of the neck.
Clause 17. The welding fume collection system as defined in clause 10, further comprising a ball swivel connector configured to connect the handle to the fume hose.
Clause 18. The welding fume collection system as defined in clause 10, wherein the flow area at the fume channel is larger than a flow area of at least one other location along a length of the handle.

## Claims

1. A welding fume torch, comprising:
a handle comprising a grip section;
a contact tip assembly configured to deliver welding current to an electrode wire;
a neck coupled between the handle and the contact tip assembly, the neck extending from a forward end of the handle;
a conductive cable coupled to the contact tip assembly and configured to conduct the welding current and guide the electrode wire to the contact tip assembly via the neck;
a fume collection nozzle surrounding at least one of the neck or the contact tip assembly, the fume collection nozzle in fluid communication with an interior of the handle; and
a fume hose in fluid communication with the fume collection nozzle via the interior of the handle,
wherein the handle comprises a fume channel having a larger flow area than the grip section, having at least one dimension that is larger than a same dimension of at least one section of the handle forward of the fume channel, and configured to reduce flow resistance for fume between the fume collection nozzle and the fume hose, at least part of the fume channel being forward of the grip section.

2. The welding fume torch as defined in claim 1, wherein the handle further comprises a trigger forward of the grip section.

3. The welding fume torch as defined in claim 1, wherein the handle comprises a first protrusion at a location of the fume channel, and wherein optionally either the handle comprises at least two sections coupled with fasteners, and the first protrusion extend from the handle in a direction parallel to the fasteners,or an interior portion of the protrusion protrudes between 50 thousandths of an inch and 150 thousandths of an inch from an interior surface of the handle that is adjacent the protrusion,
or the handle comprises a second protrusion at a location of the fume channel and on an opposite side of the handle from the first protrusion.

4. The welding fume torch as defined in claim 1, wherein the at least one dimension is transverse to a plane of a centerline of the neck.

5. The welding fume torch as defined in claim 1, further comprising a ball swivel connector configured to connect the handle to the fume hose.

6. The welding fume torch as defined in claim 1, wherein the flow area at the fume channel is larger than a flow area of at least one other location along a length of the handle.

7. A welding fume collection system, comprising:
a suction source; and
a welding fume torch coupled to the suction source via a fume hose, the welding fume torch comprising:
a handle comprising a grip section;
a contact tip assembly configured to deliver welding current to an electrode wire;
a neck coupled between the handle and the contact tip assembly, the neck extending from a forward end of the handle;
a conductive cable coupled to the contact tip assembly and configured to conduct the welding current and guide the electrode wire to the contact tip assembly via the neck; and
a fume collection nozzle surrounding at least one of the neck or the contact tip assembly, the fume collection nozzle in fluid communication with an interior of the handle;
wherein the fume hose is in fluid communication with the fume collection nozzle via the interior of the handle, and
wherein the handle comprises a fume channel having a larger flow area than the grip section, having at least one dimension that is larger than a same dimension of at least one section of the handle forward of the fume channel, and configured to reduce flow resistance for fume between the fume collection nozzle and the fume hose, at least part of the fume channel being forward of the grip section.

8. The welding fume collection system as defined in claim 7, wherein the handle further comprises a trigger forward of the grip section.

9. The welding fume collection system as defined in claim 7, wherein the handle comprises a first protrusion at a location of the fume channel.

10. The welding fume collection system as defined in claim 9, wherein the handle comprises at least two sections coupled with fasteners, and the first protrusion extend from the handle in a direction parallel to the fasteners.

11. The welding fume collection system as defined in claim 9, wherein an interior portion of the protrusion protrudes between 50 thousandths of an inch and 150 thousandths of an inch from an interior surface of the handle that is adjacent the protrusion.

12. The welding fume collection system as defined in claim 9, wherein the handle comprises a second protrusion at a location of the fume channel and on an opposite side of the handle from the first protrusion.

13. The welding fume collection system as defined in claim 7, wherein the at least one dimension is transverse to a plane of a centerline of the neck.

14. The welding fume collection system as defined in claim 7, further comprising a ball swivel connector configured to connect the handle to the fume hose.

15. The welding fume collection system as defined in claim 7, wherein the flow area at the fume channel is larger than a flow area of at least one other location along a length of the handle.
